# EUROPÄISCHE PATENTSCHRIFT

(11) **EP 1 114 801 B1**
(45) Veröffentlichungstag und Bekanntmachung des Hinweises auf die Patenterteilung: **17.12.2003**
(21) Anmeldenummer: 00128479.3
(22) Anmeldetag: 23.12.2000
(51) Int. Cl.: C03B 33/027, B26D 1/56

(54) **Verfahren zum fortlaufenden Ablängen von Zuschnitten aus einem kontinuierlich bewegten Endlosmaterial und zugehörige Vorrichtung**
Method for continuously cutting an endless material and apparatus used therefor
Procédé de coupe en continu d' un ruban infini et appareil pour appliquer ledit procédé

(30) Priorität: 07.01.2000 DE 10000469
(43) Veröffentlichungstag der Anmeldung: 11.07.2001
(73) Patentinhaber: Schott Spezialglas GmbH, 55122 Mainz (DE)
(72) Erfinder: Wagner, Johannes, 55263 Wackernheim (DE); Hepp, Rüdiger, 55129 Mainz (DE); Wegener, Holger, Dipl.-Ing., 31061 Alfeld (DE); Larm, Helmut, 31061 Alfeld (DE); Hauer, Dirk, Dipl.-Ing., 55218 Ingelheim (DE); Geissler, Heinz-Georg, 65510 Hünstetten (DE)
(74) Vertreter: Fuchs Mehler Weiss & Fritzsche

(56) Entgegenhaltungen:
- FR-A- 2 157 606
- GB-A- 1 157 352
- US-A- 3 581 615
- US-A- 3 892 153

## Beschreibung

Die Erfindung betrifft ein Verfahren zum fortlaufenden Ablängen von Zuschnitten aus einem kontinuierlich bewegten Endlosmaterial durch fliegendes Ablängen während der Bewegung des Endlosmaterials mittels einer bei jedem Zuschnitt synchron auf die Geschwindigkeit des Endlosmaterials beschleunigten Schneideinrichtung.

Die Erfindung betrifft ferner eine Vorrichtung zum Durchführen des Verfahrens.

Auf bestimmten technischen Gebieten, z.B. bei der Flachglasherstellung, in Stahl, Aluminium oder andere Metalle erzeugenden bzw. verarbeitenden Bereichen, bei bestimmten Sparten der Kunststoffindustrie (wie beispielsweise der Folienherstellung) oder in Bereichen der Lebensmittelindustrie, steht das Ausgangsprodukt in Form von kontinuierlich bewegtem Endlosmaterial zur Verfügung, typischerweise in Form von Bändern, von dem vorgegebene Zuschnitte fortlaufend abgelängt werden müssen. Die Schneidlinie liegt dabei senkrecht zur Bewegungsrichtung des Endlosmaterials, d.h. der Bahnkante.

Um eine Unterbrechung der kontinuierlichen Bewegung des Endlosmaterials und damit eine Erhöhung der Prozeßzeiten zu vermeiden, wird in bekannter Weise nach dem Prinzip der "Fliegenden Säge", d.h. fliegend während der Bewegung des Endlosmaterials, die Ablängung des Zuschnitts durchgeführt. Bei diesem Prinzip der "Fliegenden Säge" wird ein Portal, auf dem sich ein Querschneidschlitten mit einem Trennwerkzeug befindet, die sogenannte Schneidbrücke, auf die Geschwindigkeit des Endlosmaterials beschleunigt.

Sobald die Materialgeschwindigkeit erreicht ist, wird ein Querschnitt ausgelöst. Somit erhält man auch bei bewegtem Endlosmaterial einen rechtwinkligen Zuschnitt vom Endlosmaterial. Im Anschluß fährt die Brücke wieder in die Ausgangslage zurück.

Das Anpassen der Geschwindigkeit der Schneidbrücke an die Geschwindigkeit des Endlosmaterials erfolgt typischerweise durch eine Steuerung, indem den Antriebssystemen der Schneidbrücke ein entsprechender Geschwindigkeits-Sollwert (V-Soll) vorgegeben wird. Darüber hinaus muß der Zeitpunkt für den Start der Synchronbewegung von der Steuerung exakt vorgegeben werden. Wenn hierbei Differenzen zwischen V-Soll der Brücke und V-Ist des Endlosmaterials auftreten, oder eine ungenaue Vorgabe des Startpunktes erfolgte, schlagen sich diese in einer Ungenauigkeit der Zuschnitte nieder. Die Geschwindigkeitsvorgabe für die Schneidbrücke ist dabei der größte Störfaktor für entstehende Ungenauigkeiten in der Länge der abgelängten Zuschnitte.

Der Erfindung liegt die Aufgabe zugrunde, das eingangs bezeichnete Verfahren so zu führen bzw. die zugehörige Vorrichtung so auszubilden, daß Schnittgenauigkeiten im 1/100 mm-Bereich erreicht werden können.

Die Lösung dieser Aufgabe gelingt für das Verfahren zum fortlaufenden Ablängen von Zuschnitten aus einem kontinuierlich bewegten Endlosmaterial durch fliegendes Ablängen während der Bewegung des Endlosmaterials mittels einer bei jedem Zuschnitt synchron auf die Geschwindigkeit des Endlosmaterials beschleunigten Schneideinrichtung gemäß der Erfindung dadurch, daß jeweils vor dem Ablängen des Zuschnitts der Abstand der vorlaufenden Schnittlinie des Endlosmaterials aus dem jeweils vorhergehenden Zuschnitt zu der Schneideeinrichtung erfaßt und mit einem Sollwert verglichen wird, welcher der vorgegebenen Länge des Zuschnitts entspricht, und daß abhängig von dem Vergleich bei Abweichungen die zu synchronisierende Geschwindigkeit der Schneideinrichtung erhöht oder erniedrigt wird und bei Übereinstimmung mit dem Sollwert das Ablängen gestartet wird.

Hinsichtlich der Vorrichtung gelingt die Lösung der Aufgabe ausgehend von einer Vorrichtung mit einer konventionellen Schneidbrücke, die einen in Bewegungsrichtung des Endlosmaterial verfahrbaren Längsschlitten aufweist, auf dem ein Querschlitten mit einer darauf durch Antriebssyteme verfahrbaren Schneideinrichtung angeordnet ist und der zum fliegenden Ablängen durch Antriebssysteme synchron auf die Geschwindigkeit des Endlosmaterials beschleunigbar ist, gemäß der Erfindung dadurch, daß an der Schneidbrücke eine Bildaufnahme-Einrichtung mit einem vorlaufenden Abstand zu der Schneidbrücke, der der Länge eines Zuschnitts entspricht, angebracht ist, und ein Regler vorgesehen ist, dem eingangsseitig die Signale der Bildaufnahme-Einrichtung zur Auswertung zugeführt sind und der ausgangsseitig mit den Antriebssystemen verbunden ist, die abhängig von der Auswertung steuerbar sind.

Das erfindungsgemäße Prinzip besteht somit darin, daß durch eine Geschwindigkeitsvorgabe die Geschwindigkeit der Schneideinrichtung in den Synchronbereich der Geschwindigkeit des Endlosmaterials gebracht wird und daß danach die Geschwindigkeit der Schneideinrichtung entsprechend dem vorgegebenen Zuschnitt feingeregelt wird. Dadurch sind Schnittgenauigkeiten im 1/100 mm-Bereich erzielbar.

Gemäß einer Weiterbildung der Erfindung wird das Verfahren so geführt, daß die Erfassung des Abstandes der vorlaufenden Schnittlinie und die nachfolgende Feinregelung der zu synchronisierenden Geschwindigkeit auch während des Ablängens durchgeführt wird und danach bis zur Aktivierung für das nachfolgende Ablängen unterbrochen wird. Damit wird die hohe Schneidgenauigkeit auch für die Dauer des Ablängens aufrechterhalten.

Eine Begrenzung des regelungstechnischen Aufwandes kann gemäß einer Ausgestaltung der Erfindung erzielt werden, wenn die Erfassung des Abstandes der vorlaufenden Schnittlinie und die nachfolgende Feinregelung der zu synchronisierenden Geschwindigkeit gestartet wird, sobald die Schneideinrichtung in den Toleranz-Bereich der durchzuführenden Ablängung gelangt.

Eine regelungstechnische einfache Regelung läßt sich gemäß einer Weiterbildung der Erfindung über eine Lageregelung erzielen, indem die vorlaufendende Schnittlinie auf eine mit der Schneideinrichtung mitbewegte Bildaufnahme-Einrichtung abgebildet wird, und die Lage des Abbildes der Schnittlinie mit einer Lage-Sollmarke verglichen und abhängig von der Lageabweichung die zu synchronisierende Geschwindigkeit der Schneideinrichtung nachgeregelt wird sowie bei Übereinstimmung der Lage des Abbildes mit der Lage-Sollmarke das Ablängen gestartet wird.

Um eine schnelle Feinregelung zu erzielen, wird diese gemäß einer Ausgestaltung der Erfindung iterativ in aufeinanderfolgenden Schritten digital durchgeführt. Auch ist eine analoge Regelung denkbar.

Gemäß einer weiteren Ausgestaltung der erfindungsgemäßen Vorrichtung ist diese zweckmässig so ausgebildet, daß die Bildaufnahme-Einrichtung eine High-speed-partial-Scan-Kamera und der Regler ein digitaler Regler ist, dem eine zugehörige Bildauswerte-Software zugeordnet ist. Eine derartige Anordnung gewährleistet die notwendige schnelle Erfassung der vorlaufenden Kante und schnelle Feinregelung.

Grundsätzlich kann auch ein analoger Regler eingesetzt werden.

Es ist gemäß einer anderen Ausgestaltung auch möglich, daß als Bildaufnahme-Einrichtung eine Kamera mit integriertem Prozessor vorgesehen ist. In diesem Fall können die Bildverarbeitungs-Software und der zugehörige Rechner entfallen.

Eine besonders schnelle Feinregelung ist möglich, wenn gemäß einer alternativen Ausführungsform als Bildaufnahme-Einrichtung eine Zeilenkamera mit nachgeschaltetem Comparator vorgesehen ist.

Zur besseren optischen Erkennung der vorlaufenden Schnittkante ist gemäß einer Ausgestaltung der Erfindung an der Schneidbrücke eine Beleuchtungsanordnung vorgesehen, die das Blickfeld der Bildaufnahme-Einrichung ausleuchtet.

Weitere Merkmale der Erfindung ergeben sich anhand der Beschreibung eines in den Zeichnungen dargestellten Ausführungsbeispieles mit fliegendem Trennen von Zuschnitten aus einem bewegten Glasband nach der Ritz-Brech-Methode.

Es zeigen:
- Figur 1: in einer schematischen Darstellung eine Frontalansicht auf die erfindungsgemäß ausgerüstete Schneidbrücke für fliegendes Ablängen,
- Figur 2: in einer schematischen Darstellung eine Seitenansicht der Schneidbrücke nach Figur 1,
- Figur 3 und Figur 4: ein Flußdiagramm für das Durchführen der fliegenden Ablängung mit der erfindungsgemäßen Geschwindigkeits-Feinregelung, und
- Fig. 5: ein schematisiertes Blockschaltbild einer Vorrichtung zur Durchführung des in den Flußdiagrammen dargestellten Verfahrens mit einer Ausschnitt-Vergrößerung im Figurenteil A.

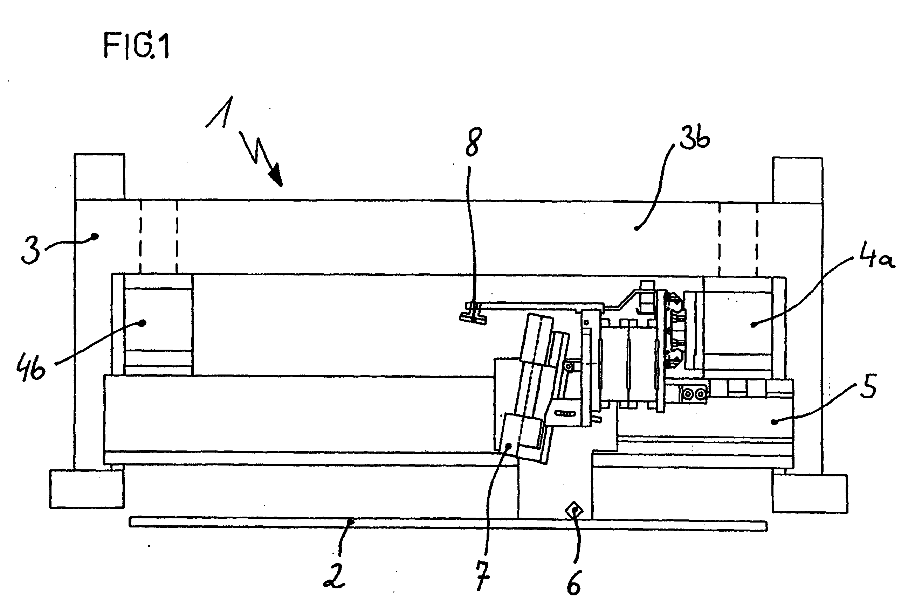

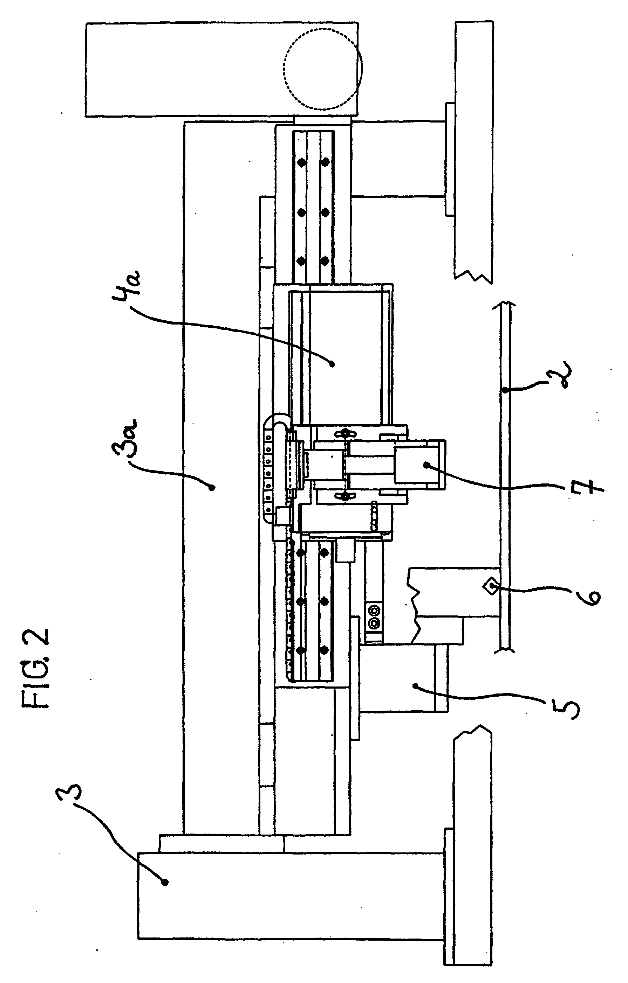

Die Figuren 1 und 2 zeigen eine Schneidbrücke 1 zum fortlaufenden Ablängen von Zuschnitten aus einem kontinuierlich bewegten Endlosmaterial in Form eines durchlaufenden Glasbandes 2 durch Anritzen, wobei das Glasband in der Frontalansicht der Schneidbrücke nach Figur 1 sich aus der Zeichenebene heraus bewegt. Entlang der Ritzlinie wird dann der Zuschnitt mechanisch weggebrochen. Das Anritzen nach dieser "Ritz-Brech-Methode" soll im Sinne der Erfindung auch als "schneiden" bezeichnet werden.

Die Schneidbrücke weist feststehende Portale 3 auf, die über Längsträger 3a und Traversen 3b miteinander verbunden sind. Auf den Längsträgern ist ein schlittenförmiges Längsmodul 4 a und 4 b längsverfahrbar, d.h. in Bewegungsrichtung des Bandes, angeordnet, die über eine Traverse miteinander verbunden sind, auf der ein schlittenförmiges Quermodul 5 senkrecht zur Bewegungsrichtung des Glasbandes 2, d.h. in Ritzrichtung verfahrbar angeordnet ist. Dieses Quermodul trägt ein Anritzwerkzeug 6 zum Anritzen des Glasbandes 2 an einer vorgegebenen Schneidlinie, wobei durch Abbrechen an der geritzten Schneidlinie der gewünschte Zuschnitt erhältlich ist. Die Schneidbrücke weist dabei entsprechende geregelte Antriebssysteme, vorzugsweise Drehstromservoantriebe bzw. Linearantriebe, auf.

Diese Schneidbrücke ist an sich bekannt und braucht daher hier nicht näher beschrieben zu werden. Ihre grundsätzliche Wirkungsweise ist in bekannter Weise derart, daß während der Bewegung des Glasbandes 2 bei jedem Zuschnitt das Anritzwerkzeug 6 aus einer Ausgangsposition auf die Geschwindigkeit des Glasbandes 2 beschleunigt, d.h. mit dieser synchronisiert wird, bevor das Anritzen erfolgt, wobei diese Synchronisation während des Anritzens aufrechterhalten wird. Am Ende des Anritzens fährt dann die Schneidbrücke in die Ausgangsposition zurück.

Gemäß der Erfindung ist mit der Schneidbrücke eine Bildaufnahme-Einrichtung 7 mechanisch starr, jedoch im Abstand einstellbar, verbunden, und zwar in einem Abstand zum Anritzwerkzeug 6 in Bewegungsrichtung des Glasbandes 2, der einem Zuschnitt entspricht. Diese Bildaufnahme-Einrichtung 7 wird daher auf die Synchrongeschwindigkeit mitbewegt, und auf sie wird beim Ritzund Brechverfahren der zuletzt ausgeführte Ritz bzw. die zuletzt geschnittene Kante, wenn das Glasband z.B. mittels eines Laserstrahles direkt durchgeschnitten wird, abgebildet, wenn der nächste Zuschnitt im Sollbereich liegt. Die Bildaufnahme-Einrichtung 7 weist dabei eine Sollmarke, ein vordefiniertes Fenster, auf, die der Position der abgebildeten Kante bzw. des Ritzes entspricht, wenn sich zwischen ihr und dem Schneid- bzw. Anritzwerkzeug genau die Länge des gewünschten Zuschnittes befindet.

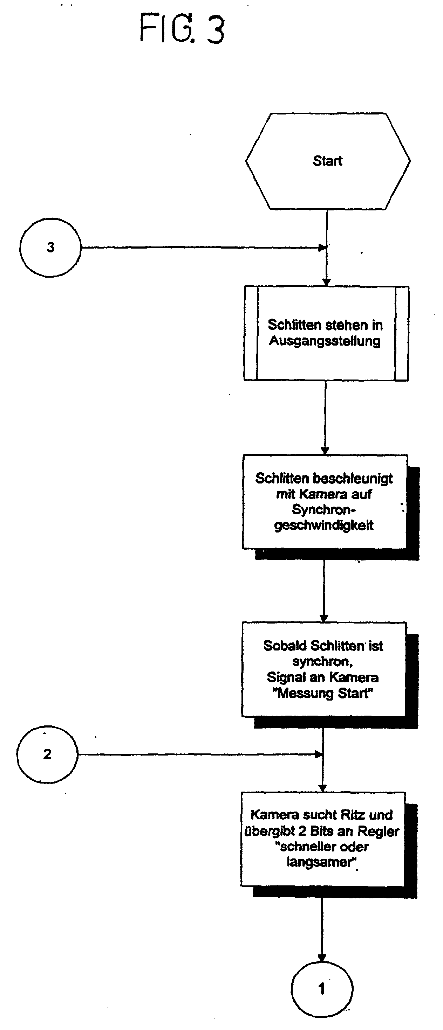

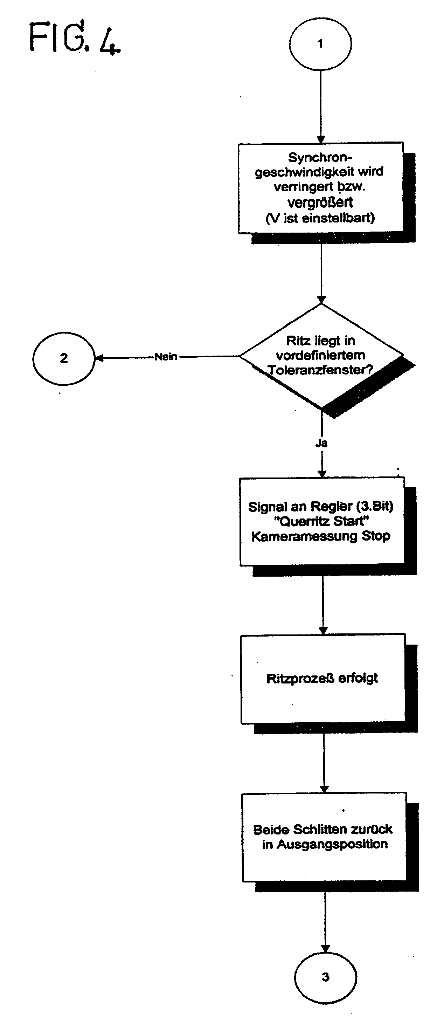

Als Bildaufnahme-Einrichtung 7 findet vorzugsweise eine High-speed-Partial-Scan-Kamera, auch CCD-Flächen Kamera genannt, in Verbindung mit einem digitalen Regler und einer Bildverarbeitungs-Software entsprechend den Flußdiagrammen in den Figuren 3 und 4, Anwendung. Die Bilder der eingesetzten Kamera werden mittels der Bildverarbeitungs-Software ausgewertet und diese liefert ein "schneller"- oder "langsamer"-Signal als Führungsgröße an die Servoantriebe des Längsmoduls, je nachdem, ob das Abbild des Ritzes bzw. der Kante auf der einen oder der anderen Seite des Fensters liegt. Ein entsprechendes "Schneller-/Langsamer"-Signal wird bei einer analogen Regelung erzeugt. Dadurch werden die Antriebe der Schneidbrücke entsprechend beschleunigt bzw. abgebremst, wobei diese Offset-Geschwindigkeit parametrierbar ist. Danach wird wieder ein Kamerabild aufgenommen bzw. ausgewertet und die Geschwindigkeit der Schneidbrücke ggf. entsprechend korrigiert. Der Regler korrigiert dabei während der Synchronfahrt der Schneidbrücke die Geschwindigkeit solange, bis der Regler bzw. die Bildverarbeitungs-Software das Signal "Ritz bzw. Schneidkante liegend im vordefinierten Fenster", ausgibt. Ein solcher Regelprozess dauert typischerweise nur wenige Sekundenbruchteile.

Das vorgenannte Signal dient den Drehstromservoantrieben des Quermoduls 5 als Startsignal zum Querschneiden. Während des Ritzens bzw. Querschneidens wird weiterhin die Sollage eingeregelt. Optionell wird dabei die Kamera nicht in Querritzrichtung mitgeführt, sondern nur in Glasflußrichtung.

Nach dem Ende des Anritzens bzw Schneidens wird die Regelung gestoppt und die Brücke fährt mit beiden Schlitten zurück in die Ausgangsposition.

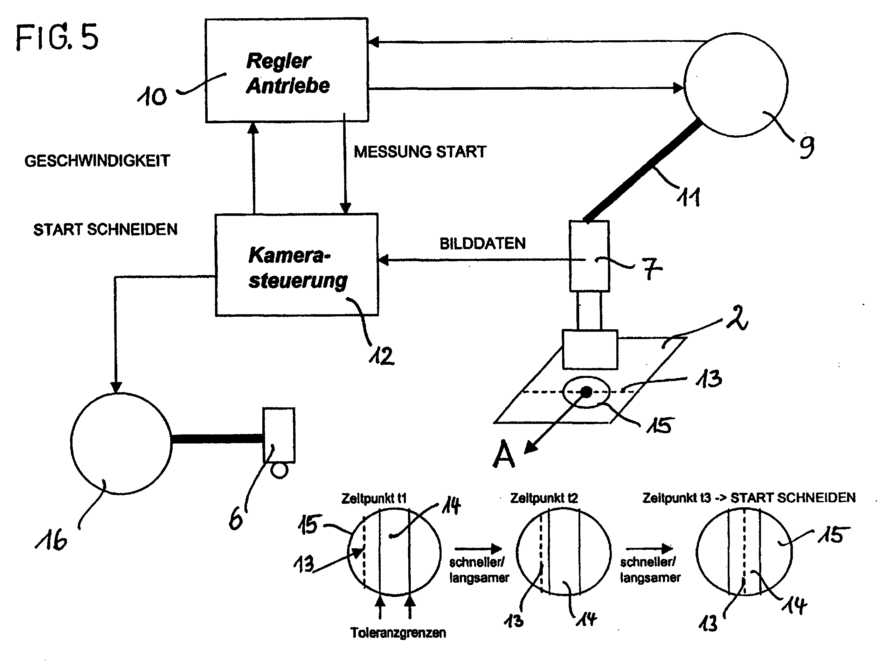

Die Fig. 5 zeigt in Form eines schematisierten Blockschaltbildes die wesentlichen Komponenten einer beispielsweisen Vorrichtung zur Durchführung des in den Flußdiagrammen nach den Figuren 3 und 4 dargestellten Verfahrens, einschließlich des Zusammenwirkens dieser Komponenten.

Der Block 9 stellt den Antrieb für die Längsmodule 4 a und 4 b dar, dem ein Antriebsregler 10 zugeordnet ist. Dieser Antriebsregler gibt an den Antrieb 9 Sollwerte für die Geschwindigkeit vor und erhält von ihm entsprechende Geschwindigkeits-Istwerte.

Der Antrieb 9 für die Längsmodule ist über ein Kamera-Antriebssystem 11, z.B. eine Spindel, mit der Bildaufnahme-Einrichtung 7, der Kamera, gekoppelt. Die Ausgangssignale der Kamera, die Bilddaten, werden einer Kamerasteuerung 12 zugeführt, die diese Daten auswertet. Durch den Antrieb 9 für die Längsmodule wird die Kamera 7 solange beschleunigt, bis sie sich synchron zum Vorschub des Glasbandes 2 bewegt. Sobald der Synchronismus der Bewegungen hergestellt ist, gibt der Antriebsregler 10 an die Kamerasteuerung 12 das Signal "Messung Start" ab.

Die Kamerasteuerung 12 wertet die Bilddaten in der Weise aus, daß sie die erfaßte Schneidspur 13 des vorlaufenden Schnittes in Beziehung setzt zu einer Referenzmarke 14 im Kamerabildfeld 15, vorgegeben durch die Toleranzgrenzen gemäß der Darstellung in der Ausschnittvergrößerung des Kamerabildfeldes 15 im Figurenteil A. In Abhängigkeit von der Lage der Schneidspur 13 auf dem Glasband 2 zur Referenzmarke 14 gibt die Kamerasteuerung 12 Signale zur Änderung der Geschwindigkeit an den Antriebsregler 10 ab, derart, daß je nach Lageabweichung die Kamera 7 schneller oder langsamer in Vorschubrichtung des Glasbandes bewegt werden soll. Der Antriebsregler 10 fährt anhand dieser Geschwindigkeits-Vorgaben die Antriebe 9 für die Längsmodule.

Die skizzierte Ausschnittvergrößerung des Kamerabildfeldes 15 im Figurenteil A zeigt dabei die Lage der Schneidspur 13 zu drei Zeitpunkten. Zum Zeitpunkt t1 befindet sich die Schneidspur 13 außerhalb der die Referenzmarke 14 bildenden Toleranzgrenzen. Die Kamerageschwindigkeit wird dann derart verändert, daß die Schneidspur 13 sich immer stärker der Referanzmarke 14 nähert (Zeitpunkt t2), bis sie sich zum Zeitpunkt t3 innerhalb der Toleranzgrenzen der Referenzmarke 14 befindet. Von der Kamerasteuerung 12 wird dann das Signal "Start Schneiden" an ein Antriebssystem 16 für den Quermodul 5 für die Schneidbewegung des Schneidwerkzeuges 6 ausgelöst.

Zur besseren Erkennung der Ritzspur bzw. der Schneidkante ist an der Schneidbrücke eine Beleuchtungseinrichtung 8 angebracht, die das Kamerasichtfeld ausleuchtet (Fig. 1). Im Fall des vorgenannten Kamaratypes erfolgt die Beleuchtung zweckmässig durch eine LED, die im roten Spektralbereich Licht emittiert. Es sind aber auch andere Beleuchtungsarten, wie z.B. "Kaltlicht", denkbar. Anstelle der vorbeschriebenen CCD-Flächenkamera können auch andere beliebige Kameratypen verwendet werden.

Es sind auch Kameras mit integriertem Prozessor bekannt und einsetzbar, die somit programmierbar sind. In einem solchen Fall kann die getrennte Bildverarbeitungs-Software und der dazugehörige Rechner entfallen.

Die schnellste Erkennung der IST-Lage des vorlaufenden Schnittes ist durch eine Zeilenkamera mit reiner Hardware in Form eines nachgeschalteten Comparators möglich, in Verbindung mit einer entsprechenden schnellen Antriebsregelung des Längs- und Quermoduls.

Neben den bereits beschriebenen Vorteilen ist hervorzuheben, daß bestehende Schneidbrücken ohne weiteres mit der erfindungsgemäßen Vorrichtung umgerüstet werden können, was die Einsatzbreite der Erfindung erhöht.

Als Einsatzgebiete für die erfindungsgemäß ausgerüsteten Schneidbrücken kommen generell alle materialerzeugenden oder materialverarbeitenden Bereiche in Betracht, in denen Endlosmaterial abgelängt werden muß.

### Bezugszeichenliste

- 1: Schneidbrücke
- 2: Glasband
- 3: Portale
- 3 a: Längsträger
- 3 b: Traversen
- 4 a: Längsmodule
- 4 b: Längsmodule
- 5: Quermodul
- 6: Anritzwerkzeug
- 7: Bildaufnahme-Einrichtung (Kamera)
- 8: Beleuchtungseinrichtung
- 9: Antrieb Längsmodul
- 10: Antriebsregler
- 11: Kamera-Antriebssystem
- 12: Kamerasteuerung
- 13: Schneidspur
- 14: Referenzmarke
- 15: Kamerabildfeld
- 16: Antriebssystem Quermodul

## Patentansprüche

1. Verfahren zum fortlaufenden Ablängen von Zuschnitten aus einem kontinuierlich bewegten Endlosmaterial (2) durch fliegendes Ablängen während der Bewegung des Endlosmaterials (2) mittels einer bei jedem Zuschnitt synchron auf die Geschwindigkeit des Endlosmaterials (2) beschleunigten Schneideinrichtung (6), mit den Schritten:
- Erzeugen einer Geschwindigkeitsvorgabe, die die Geschwindigkeit der Schneideinrichtung in den Synchronbereich der Geschwindigkeit des Endlosmaterials bringt, und
- Erzeugen eines Regelsignals für eine Feinregelung der im Synchronbereich befindlichen Geschwindigkeit der Schneideinrichtung, indem jeweils vor dem Ablängen des Zuschnitts der Abstand der vorlaufenden Schnittlinie des Endlosmaterials (2) aus dem jeweils vorhergehenden Zuschnitt zu der Schneideinrichtung (6) als IST-Wert erfaßt und mit einem Sollwert verglichen wird, welcher der vorgegebenen Länge des Zuschnitts entspricht, und daß abhängig von dem Vergleich bei Abweichungen die zu synchronisierende Geschwindigkeit der Schneideinrichtung (6) erhöht oder erniedrigt wird und bei Übereinstimmung mit dem Sollwert das Ablängen gestartet wird.

2. Verfahren nach Anspruch 1, **dadurch gekennzeichnet, daß** die Erfassung des Abstandes der vorlaufenden Schnittlinie und die nachfolgende Feinregelung der zu synchronisierenden Geschwindigkeit auch während des Ablängens durchgeführt wird und danach bis zur Aktivierung für das nachfolgende Ablängen unterbrochen wird.

3. Verfahren nach Anspruch 1 oder 2, **dadurch gekennzeichnet, daß** die Erfassung des Abstandes der vorlaufenden Schnittlinie und die nachfolgende Feinregelung der zu synchronisierenden Geschwindigkeit gestartet wird, sobald die Schneideinrichtung (6) in den Toleranz-Bereich der durchzuführenden Ablängung gelangt.

4. Verfahren nach einem der Ansprüche 1 bis 3, **dadurch gekennzeichnet, daß** die vorlaufende Schnittlinie auf eine mit der Schneideinrichtung (6) mitbewegte Bildaufnahme-Einrichtung (7) abgebildet wird, und die Lage des Abbildes der Schnittlinie mit einer Lage-Sollmarke verglichen und abhängig von der Lageabweichung die zu synchronisierende Geschwindigkeit der Schneideinrichtung (6) nachgeregelt wird sowie bei Übereinstimmung der Lage des Abbildes mit der Lage-Sollmarke das Ablängen gestartet wird.

5. Verfahren nach einem der Ansprüche 1 bis 5, **dadurch gekennzeichnet, daß** die Feinregelung iterativ in aufeinanderfolgenden Schritten digital durchgeführt wird.

6. Vorrichtung zum Durchführen des Verfahrens nach einem der Ansprüche 1 bis 5, mit einer konventionellen Schneidbrücke (1), die einen in Bewegungsrichtung des Endlosmaterials verfahrbaren Längsschlitten (4) aufweist, auf dem ein Querschlitten (5) mit einer darauf durch Anstriebssysteme verfahrbaren Schneideeinrichtung (6) angeordnet ist und der zum fliegenden Ablängen durch Antriebssysteme synchron auf die Geschwindigkeit des Endlosmaterials beschleunigbar ist, **dadurch gekennzeichnet, daß** an der Schneidbrücke (1) eine Bildaufnahme-Einrichtung (7) mit einem vorlaufenden Abstand zur Schneidbrücke, der der Länge eines Zuschnitts entspricht, angebracht ist, und ein Regler vorgesehen ist, dem eingangsseitig die Signale der Bildaufnahme-Einrichtung (7) zur Auswertung zugeführt sind und der ausgangsseitig mit den Antriebssystemen verbunden ist, die abhängig von der Auswertung steuerbar sind.

7. Vorrichtung nach Anspruch 6, **dadurch gekennzeichnet, daß** die Bildaufnahme-Einrichtung (7) eine High-speed-partial-Scan-Kamera und der Regler ein digitaler Regler ist, dem eine zugehörige Bildauswerte-Software zugeordnet ist.

8. Vorrichtung nach Anspruch 6, **dadurch gekennzeichnet, daß** als Bildaufnahme-Einrichtung (7) eine Kamera mit integriertem Prozessor vorgesehen ist.

9. Vorrichtung nach Anspruch 6, **dadurch gekennzeichnet, daß** als Bildaufnahme-Einrichtung (7) eine Zeilenkamera mit nachgeschaltetem Comparator vorgesehen ist.

10. Vorrichtung nach einem der Ansprüche 6 bis 9, **dadurch gekennzeichnet, daß** an der Schneidbrücke (1) eine Beleuchtungsanordnung (8) zum Ausleuchten des Blickfeldes der Bildaufnahme-Einrichtung (7) angebracht ist.

## Claims

1. Method for continuously cutting to length blanks from a continuously moving endless material (2) by cutting to length in a floating fashion during the movement of the endless material (2) by means of a cutting device (6) which is accelerated synchronously for each blank to the speed of the endless material(2), having the following steps:
- generating a speed stipulation which brings the speed of the cutting device into the synchronous range of the speed of the endless material, and
- generating a control signal for fine control of the speed of the cutting device located in synchronous range by acquiring as ACTUAL value in each case before the blank is cut to length the distance between the previous cut line of the endless material (2) from the respectively preceding blank and the cutting device (6), and comparing it with a desired value which corresponds to the prescribed length of the blank, and in that in the event of deviations the speed of the cutting device (6) to be synchronized is raised or lowered as a function of the comparison, and cutting to length is started upon correspondence with the desired value.

2. Method according to Claim 1, **characterized in that** the acquisition of the distance of the previous cut line and the subsequent fine control of the speed to be synchronized is also carried out during cutting to length, and is interrupted thereafter up to activation for the subsequent cutting to length.

3. Method according to Claim 1 or 2, **characterized in that** the acquisition of the distance of the previous cut line and the subsequent fine control of the speed to be synchronized is started as soon as the cutting device (6) reaches the tolerance range of the cutting to length to be carried out.

4. Method according to one of Claims 1 to 3, **characterized in that** the previous cutting line is projected onto an image pick-up device (7) also moving with the cutting device (6), and the position of the image of the cutting line is compared with a desired position mark and the speed of the cutting device (6) to be synchronized is corrected as a function of the positional deviation, and cutting to length is started upon correspondence of the position of the image with the desired positional mark.

5. Method according to one of claims 1 to 5, **characterized in that** the fine control is carried out digitally in an iterative fashion in successive steps.

6. Apparatus for carrying out the method according to one of Claims 1 to 5, having a conventional cutting bridge (1) which has a longitudinal slide (4) which can be moved in the direction of movement of the endless material and on which there is arranged a transverse slide (5) with a cutting device (6), which can be moved thereon by drive systems, and which can be accelerated synchronously by drive systems to the speed of the endless material for the purpose of cutting to length in a floating fashion, **characterized in that** an image pickup device (7) is provided at the cutting bridge (1) at a previous distance from the cutting bridge which corresponds to the length of a blank, and a controller is provided which is fed for evaluation on the input side with the signals of the image pickup device (7) and which is connected on the output side to the drive systems, which can be controlled as a function of the evaluation.

7. Apparatus according to Claim 6, **characterized in that** the image pickup device (7) is a high-speed partial scan camera, and the controller is a digital controller which is assigned associated image evaluation software.

8. Apparatus according to Claim 6, **characterized in that** a camera with integrated processor is provided as image pickup device (7).

9. Apparatus according to Claim 6, **characterized in that** a line-scan camera with a downstream comparator is provided as image pickup device (7).

10. Apparatus according to one of Claims 6 to 9, **characterized in that** an illuminating arrangement (8) for illuminating the field of view of the image pickup device (7) is provided at the cutting bridge (1).

## Revendications

1. Procédé de coupe en continu de sections d'un ruban infini (2) qui se déplace continuellement par coupe volante pendant le déplacement du ruban infini (2) au moyen d'un dispositif de coupe (6) accéléré de manière synchrone à chaque section à la vitesse du ruban infini (2), comportant les étapes suivantes :
- production d'une consigne de vitesse qui amène la vitesse du dispositif de coupe dans la plage de synchronisation de la vitesse du ruban infini, et
- production d'un signal de régulation pour une régulation précise de la vitesse du dispositif de coupe qui se trouve dans la plage de synchronisation, en détectant, à chaque fois avant la coupe de la section, l'écart entre la ligne de coupe anticipée du ruban infini (2) résultant à chaque fois de la section précédente et le dispositif de coupe (2) sous la forme d'une valeur RÉELLE et en la comparant avec une valeur de consigne, laquelle correspond à la longueur prédéfinie de la section, et que la vitesse à synchroniser du dispositif de coupe (6) est augmentée ou diminuée par le mécanisme de comparaison en cas de différence et la coupe est démarrée en cas de concordance avec la valeur de consigne.

2. Procédé selon la revendication 1, **caractérisé en ce que** la détection de l'écart de la ligne de coupe anticipée et la régulation précise qui suit de la vitesse à synchroniser sont également effectuées pendant la coupe et elles sont ensuite interrompues jusqu'à l'activation pour la coupe suivante.

3. Procédé selon la revendication 1 ou 2, **caractérisé en ce que** la détection de l'écart de la ligne de coupe anticipée et la régulation précise qui suit de la vitesse à synchroniser sont démarrées dès que le dispositif de coupe (6) arrive dans la plage de tolérances de la coupe à effectuer.

4. Procédé selon l'une des revendications 1 à 3, **caractérisé en ce que** la ligne de coupe anticipée est représentée sur un dispositif d'enregistrement d'image (7) qui se déplace en même temps que le dispositif de coupe (6) et la position de la représentation de la ligne de coupe est comparée avec un repère de consigne de la position et la vitesse à synchroniser du dispositif de coupe (6) est réajustée en fonction de la différence de position et la.coupe est démarrée si la position de la représentation coïncide avec le repère de consigne de la position.

5. Procédé selon l'une des revendications 1 à 5, **caractérisé en ce que** la régulation précise est effectuée de manière numérique par itération par étapes successives.

6. Appareil pour appliquer le procédé selon l'une des revendications 1 à 5, muni d'un pont de coupe (1) conventionnel qui présente un coulisseau longitudinal (4) pouvant être déplacé dans le sens du déplacement du ruban infini et sur lequel est disposé un coulisseau transversal (5) doté d'un dispositif de coupe (6) pouvant être déplacé sur celui-ci par des systèmes d'entraînement et lequel peut être accéléré de manière synchrone à la vitesse du ruban infini par les systèmes d'entraînement en vue de la coupe volante, **caractérisé en ce qu'**un dispositif d'enregistrement d'image (7) présentant par rapport au pont de coupe un écart anticipé qui correspond à la longueur d'une section est monté sur le pont de coupe (1) et il est prévu un régulateur à l'entrée duquel sont acheminés en vue de leur analyse les signaux du dispositif d'enregistrement d'image (7) et dont la sortie est reliée aux systèmes d'entraînement, lesquels peuvent être commandés en fonction de l'analyse.

7. Appareil selon la revendication 6, **caractérisé en ce que** le dispositif d'enregistrement d'image (7) est une caméra à balayage partiel à haute vitesse et le régulateur est un régulateur numérique auquel est associé un logiciel d'analyse d'image correspondant.

8. Appareil selon la revendication 6, **caractérisé en ce que** le dispositif d'enregistrement d'image (7) prévu est une caméra avec processeur intégré.

9. Appareil selon la revendication 6, **caractérisé en ce que** le dispositif d'enregistrement d'image (7) prévu est une caméra à lignes à la suite de laquelle est branché un comparateur.

10. Appareil selon l'une des revendications 6 à 9, **caractérisé en ce qu'**un arrangement d'éclairage (8) est monté sur le pont de coupe (1) pour éclairer le champ de vision du dispositif d'enregistrement d'image (7).
